# EUROPEAN PATENT APPLICATION

(11) **EP 1 693 282 A1**
(43) Date of publication of application: **23.08.2006**
(21) Application number: 06101320.7
(22) Date of filing: 06.02.2006
(51) Int. Cl.: B62D 5/093, B62D 1/12

(54) **Automotive hydraulic steering system, in particular for earth-moving machines.**

(30) Priority: 18.02.2005 IT BO20050085
(71) Applicant: CNH Italia S.p.A., 41100 Modena (IT)
(72) Inventor: Burgo, Giuseppe, 40026, Imola (Bo) (IT)
(74) Representative: CNH IP Department

(57) **Abstract**

An automotive steering system (100) having a steering motor (102) controlled by steering devices (ST; ST, JS). The system (100) is characterized by having a hydraulic fast steering system (101) which hydraulically bypasses the steering motor (102). The hydraulic fast steering system (101) in turn has a drive valve assembly (108) to which pressurized oil is diverted when fast steering mode is engaged by an actuating device (P); the drive valve assembly (108) permitting greater oil flow therethrough than through the steering motor (102).

## Description

The present invention relates to an automotive steering system, in particular for earth-moving machines. More specifically, the present invention relates to a fast steering system.

So-called "fast steering" systems are a well-known feature of both agricultural and earth-moving machines. These fast steering systems are substantially hydraulic systems, whereby, once the fast steering mode is set by the operator, turning the steering wheel slightly in a given direction results in the wheels to continue to turn in that direction by the system itself, even if the operator releases control of the steering wheel. To stop the wheels turning in a given direction, the operator simply turns the steering wheel, even for a very short time, in the opposite direction.

Fast steering mode can also be engaged or disengaged as a function of vehicle travelling conditions. That is, in on-road conditions, fast steering mode, being potentially dangerous, is disengaged. In contrast, in off-road working conditions, it is extremely useful as it enables steering of the vehicle with very little effort on the part of the operator. On building sites or farmland, in fact, the same manoeuvres must often be performed repeatedly.

For example, in the case of earth-moving machines, when loading material onto a truck, the machine, after scooping up the material into the front loader, must back up and turn as fast as possible to dump the material onto the truck.

In short, the introduction of conventional fast steering systems has simply relieved the operator from having to continue turning the steering wheel to steer the vehicle as required.

Although a big improvement as compared to conventional steering systems, currently used fast steering systems fail to solve the problem of actually increasing steering speed.

It is an object of the present invention to provide an automotive fast steering system designed to actually increase steering speed, when required, in fast steering mode.

According to the present invention, there is provided an automotive fast steering system, as claimed in the accompanying Claims.

Two non-limiting embodiments of the present invention will be described by way of example with reference to the accompanying drawings, in which:
Figure 1 shows a first embodiment of the present invention; and
Figure 2 shows a second embodiment of the present invention.

It should be pointed out that only the hydraulic components essential for a clear understanding of the invention are numbered and described in the following disclosure.

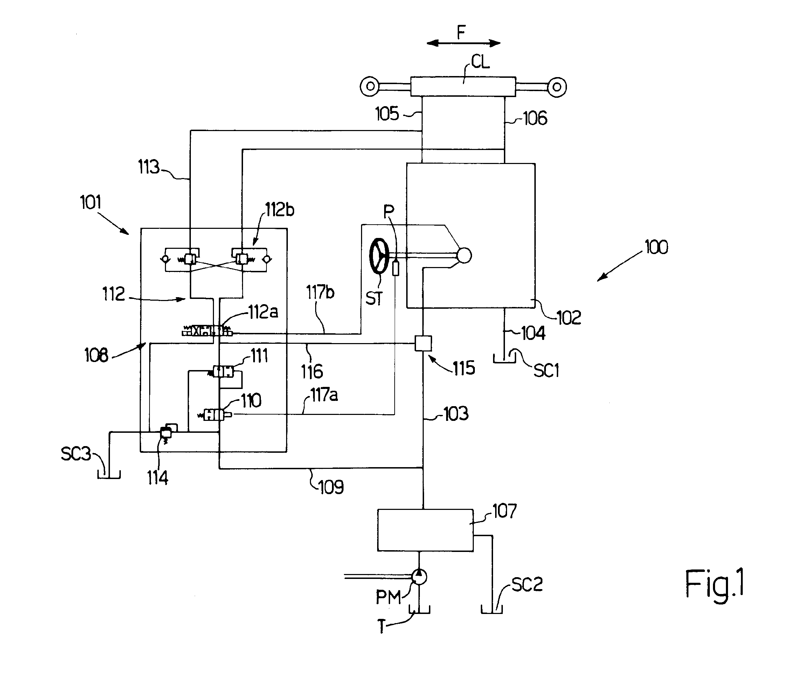

Number 100 in Figure 1 indicates a main hydraulic steering system associated with a hydraulic fast steering system 101 in accordance with the present invention.

Hydraulic system 100 comprises a conventional steering wheel ST associated with a known steering motor 102. In normal operating conditions, i.e. when hydraulic fast steering system 101 is disengaged, a pump PM pumps oil from a tank T to steering motor 102 along a conduit 103.

Steering motor 102 is connected hydraulically to a drain SC1 by a conduit 104, and to a steering cylinder CL by two conduits 105, 106.

A priority valve 107, with a drain SC2, is interposed in known manner between steering motor 102 and pump PM.

As is known, to turn the wheels (not shown) right or left, the operator (not shown) turns steering wheel ST, which unbalances the hydraulic circuits in steering motor 102 (in known manner not described in detail), so that pressurized oil is fed to conduit 105 or 106. Depending on whether oil is fed by steering motor 102 to conduit 105 or conduit 106, the vehicle is turned to the left or to the right.

The present invention comprises an innovative drive valve assembly 108 forming part of system 101, and to which pressurized oil is diverted when fast steering mode is engaged by pressing a button P on steering wheel ST. Assembly 108 also has a drain SC3. As shown in Figure 1, priority valve 107 supplies drive valve assembly 108 with oil along a conduit 109.

Generally speaking, assembly 108 is substantially similar to (and as such performs all the normal functions of) an ordinary steering motor, to which a member is added to selectively engage fast steering mode (see below).

In fact, assembly 108 comprises a slide valve 110 activated directly by button P when fast steering mode is engaged by the operator (see below). Conduit 109 is also provided with a drain valve 111 for draining oil from the hydraulic circuit into drain SC3; and a direction control valve 112 comprising a slide valve 112a and a crossover device 112b for switching between conduit 109 and a conduit 113.

As shown, conduit 109 is connected to conduit 106, and conduit 113 to conduit 105. Conduits 109 and 113 therefore provide for supplying hydraulic cylinder CL with oil in the same way as conduits 105, 106.

A valve 114, for controlling maximum circuit pressure, completes assembly 108.

Steering motor 102 is also provided with a shuttle valve 115 controlled by a pressure tap 116 along conduit 109 (see below).

As stated, button P, by means of an electric control 117a, selectively activates slide valve 110 whereas steering wheel ST, by means of an electric control 117b, activates slide valve 112a to feed pressurized oil to one branch or the other of device 112b and so activate cylinder CL as required to turn the vehicle in the desired direction.

In actual use, to engage fast steering mode, the operator simply presses button P. Pressing button P sets slide valve 110 to the open configuration shown in Figure 1. The pressurized oil pumped by pump PM is therefore supplied to assembly 108, thus pressurizing conduit 109.

Pressure tap 116 detects the presence of pressurized oil in conduit 109, and commands shuttle valve 115 to cut off pressurized oil supply to steering motor 102 along conduit 103.

When fast steering mode is engaged, oil therefore bypasses steering motor 102, and is supplied solely to assembly 108, which, as stated, acts as a sort of complementary steering motor, by also being capable (like steering motor 102) of steering the vehicle by means of cylinder CL.

That is, the pressurized oil, being allowed to flow along conduit 109, supplies direction control valve 112 with oil, while steering wheel ST, as stated, acts on slide valve 112a to supply pressurized oil to one branch or the other of device 112b and so operate cylinder CL as required to steer the vehicle in the desired direction.

To actually achieve fast steering performance, i.e. an actual increase in steering speed, assembly 108 is supplied with much more oil than normally supplied to steering motor 102 when fast steering mode is not engaged. For this purpose, assembly 108 is sized for greater oil flow than steering motor 102.

On receiving a larger quantity of oil from assembly 108, cylinder CL is moved in either one of the directions indicated by arrow F, to steer the vehicle as required.

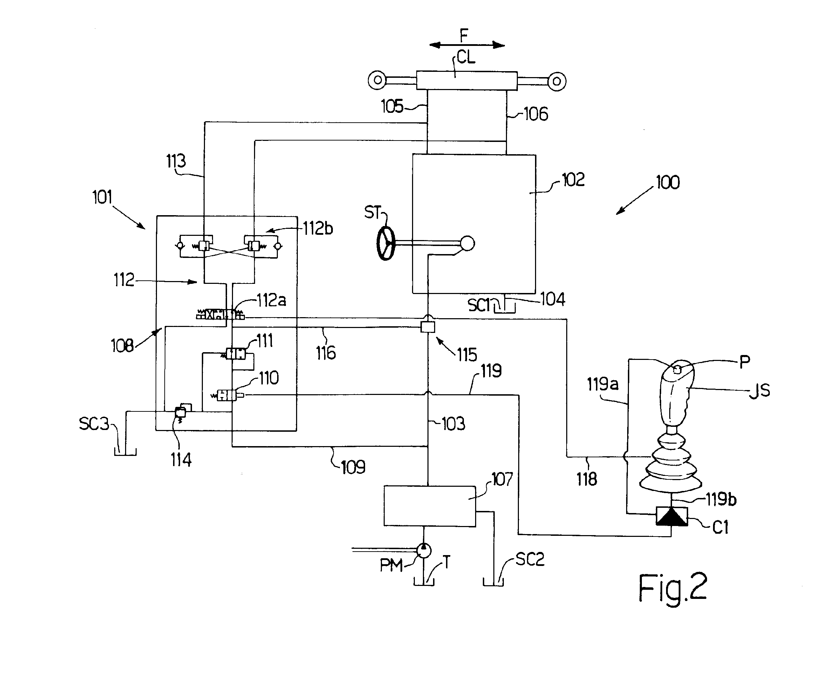

In the second embodiment in Figure 2, system 100 is equipped with a joystick JS fitted with button P which, in the Figure 1 embodiment, was integrated in steering wheel ST. In this embodiment, joystick JS is connected over a direct electric line 118 to slide valve 112a, and over an indirect electric line 119 to slide valve 110 of assembly 108.

As is known in the art, joystick JS can be used to steer the vehicle (instead of steering wheel ST). By moving joystick JS (to the right or left), an electric signal is sent to valve 112a, which slides to direct oil flow to the right or left, as instructed by joystick JS.

More specifically, button P is connected electrically to an electronic central control unit C1 over an electric line 119a, while joystick JS is connected to central control unit C1 over an electric line 119b. Central control unit C1, in turn, is connected electrically to slide valve 110 over electric line 119.

Electric line 119 permits oil flow to valve 112a via slide valve 110. Electronic central control unit C1, controlled by joystick JS, sends an electric signal to slide valve 110 to open valve 110 partly (e.g. to let through 20 litres/min) when fast steering mode is disengaged.

In actual use, to engage fast steering mode, the operator simply presses button P, as in the first embodiment in Figure 1. As a result, a signal is sent over electric line 119a to central control unit Cl and, hence, to slide valve 110 (over electric line 119) to set valve 110 to the fully-opened position shown in Figure 2.

In other words, on receiving the signal from button P (i.e. in fast steering mode), electronic central control unit C1 supplies valve 110 with a stronger current to open valve 110 completely (e.g. to let through 35 litres/min).

Joystick JS and button P may therefore be said to regulate opening of slide valve 110 to supply a large amount of oil to cylinder CL in fast steering mode.

It should be pointed out that, when using the joystick, steering motor 102 is not used (either in normal or fast steering mode) and is bypassed in favour of assembly 108.

The main advantage of the system according to the present invention lies in actually achieving fast steering performance, i.e. a considerable increase in steering speed, by supplying a larger amount of oil to the steering cylinder and bypassing the normal steering motor on steering wheel ST.

## Claims

1. An automotive steering system (100) comprising a steering motor (102) controlled by steering means (ST), a hydraulic circuit and at least one steering cylinder (CL) for controlling the direction of steering; and
**characterized in that** the system further comprises a hydraulic fast steering system (101) which hydraulically bypasses said steering motor (102); said hydraulic fast steering system (101) in turn comprising a drive valve assembly (108) to which pressurized oil is diverted when fast steering mode is engaged; said drive valve assembly (108) permitting a greater oil flow to said steering cylinder (CL) than through said steering motor (102).

2. A system (100) according to claim 1, **characterized in that** said drive valve assembly (108) comprises a first slide valve (110) activated by actuating means (P) for the operator to engage fast steering mode.

3. A system (100) according to claim 2, **characterized in that** the system further comprises a shuttle valve (115) to prevent pressurized oil supply to said steering motor (102) upon activation of said first slide valve (110).

4. A system (100) according to claims 2 or 3, **characterized in that** said drive valve assembly (108) also comprises a direction control valve (112), in turn comprising a second slide valve (112a), and a device (112b) for steering the vehicle in a selected direction.

5. A system according to any of the preceding claims, **characterized in that** the steering means comprises a conventional steering wheel (ST).

6. A system according to claim 5 when appended to claim 4, **characterized in that**, when fast steering mode is selected, the conventional steering wheel (ST) controls the position of said second slide valve (112a) to determine the direction of steering.

7. A system (100) according to any of claims 1 to 5, **characterized in that** the system comprises a joystick (JS) .

8. A system (100) according to claim 7, when appended directly or indirectly to claim 2, **characterized in that** said joystick (JS) allows the operator to proportionally regulate the throughput of oil through said first slide valve (110), admitting only a lower flow rate therethrough when normal steering mode is selected whereas a higher flow rate is admitted when fast steering mode is selected.

9. A system (100) according to claim 7 or 8, **characterized in that** an electronic central control unit (C1) is provided between the joystick (JS) and the drive valve assembly (108) to control the electric signals from the joystick (JS) for modulating opening/closing of said first slide valve (110).

10. A system (100) according to claims 7 to 9 when appended to claim 3, **characterized in that**, when joystick steering is selected, pressurized oil supply to said steering motor (102) is prevented.
